# EUROPEAN PATENT SPECIFICATION

(11) **EP 3 553 966 B1**
(45) Date of publication and mention of the grant of the patent: **21.10.2020**
(21) Application number: 18168428.3
(22) Date of filing: 20.04.2018
(51) Int. Cl.: H04B 7/06

(54) **BEAM PATTERN SELECTION FOR VEHICULAR COMMUNICATION USING MACHINE LEARNING**
STRAHLMUSTERAUSWAHL ZUR FAHRZEUGKOMMUNIKATION UNTER VERWENDUNG VON MASCHINELLEM LERNEN
SÉLECTION DE DIAGRAMME DE FAISCEAU POUR COMMUNICATION POUR VÉHICULE À L'AIDE DE L'APPRENTISSAGE MACHINE

(30) Priority: 11.04.2018 EP 18166912; 13.04.2018 EP 18167381
(43) Date of publication of application: 16.10.2019
(73) Proprietor: Technische Universität Darmstadt, 64289 Darmstadt (DE)
(72) Inventor: ASADI, Arash, 64289 Darmstadt (DE); SIM, Gek Hong, 64289 Darmstadt (DE); KLOS, Sabrina, 64289 Darmstadt (DE); KLEIN, Anja, 64289 Darmstadt (DE); HOLLICK, Matthias, 64289 Darmstadt (DE)
(74) Representative: Zahn, Matthias

(56) References cited:
- WO-A1-2014/116636
- WO-A2-2018/053355
- MORTEZA HASHEMI ET AL: "Efficient Beam Alignment in Millimeter Wave Systems Using Contextual Bandits", ARXIV.ORG, CORNELL UNIVERSITY LIBRARY, 201 OLIN LIBRARY CORNELL UNIVERSITY ITHACA, NY 14853, 3 December 2017 (2017-12-03), XP080844103,

## Description

### Technical Field

In general, the disclosure relates to wireless data communication, between transmitters and receivers, and more in particular the disclosure relates to system, method and computer program for communicating data to receivers in moving vehicles through carrier frequencies in the extremely high frequency (ETH) spectrum, by using beam selection supported by machine learning.

### Background

With (semi) autonomous car driving expected for the near future, there is a demand to communicate sensory data and other data to the cars at high throughput with data-rates measured in gigabits per second.

Traditional radio networks such as a Long-Term Evolution (LTE) network or other networks operate at relatively low frequencies (sub-6 GHz, e.g., 0.7 GHz - 2.6 GHz), but they are not designed for such data-rates and volumes.

At much higher frequencies, radio systems that operate at millimeter waves ("mmW") have become the de-facto candidate for 5G vehicle-to-everything communication. However, communication via mm radio waves is highly directional and is susceptible to blockage, for example, by obstacles.

One of the approaches is beam-forming and spatial multiplexing from multielement antenna arrays. The following references provide further background information:
- Rangan et al. "Millimeter-Wave Cellular Wireless Networks: Potentials and Challenges" Proceedings of the IEEE, Volume 102, Issue 3, March 2014.
- Sim, Gek Hong, et al. 5G Millimeter-Wave and D2D Symbiosis: 60 GHz for Proximity-based Services, IDEE Wireless Communications, August 2016
- WO 2016 / 120588 relates to beam forming in a mesh-network. The approach is run-time adaptive.
- JP 2001284930 A looks at beam-forming under consideration of the altitude (or height) of antennas relatively to the road.

There are however further constraints, related to the movement of the cars (or vehicles in general), to uplink-downlink time division access, to communication range limitations, to deployment insufficiencies and to other reasons.

WO 2014/116636 A1 discusses the communication of signals between wireless communication devices in a mmWave frequency band. The devices transmit the mmWave signals in different beamforming settings. A device that has received a mmWave signal communicates feedback regarding the received signal so that the sending device adjusts its mmWave beam settings accordingly.

### Summary

The invention is defined in the independent claims. Advantageous embodiments are set out in the dependent claims.

### Brief Description of the Drawings

FIGS. 1A and 1B illustrate an overview to a computer-implemented method for controlling a radio transmitter that communicates data to objects by transmitting directed radio signals as beams into corresponding sectors;
FIG. 2 illustrates an overview to a traffic scenario with road vehicles on a road;
FIG. 3 illustrates the scenario with a first radio network;
FIG. 4 illustrates the scenario with further detail for the first radio network;
FIG. 5 illustrates a second radio network;
FIG. 6 illustrate a computer that communicates with transmitters, wherein the computer performs a method that involves machines learning;
FIG. 7 illustrates the scenario, with an attenuating object;
FIG. 8 illustrates a flow-chart diagram of computer-implemented method for controlling a radio transmitter that communicates data to objects being associated with receivers.
FIGS. 9A and 9B illustrate formulas;
FIGS. 10A and 10B illustrate pseudocode for an algorithm; and
FIG. 11 illustrates a generic computer.

### Detailed Description

### Conventions

Description and drawings occasionally identify pluralities or sets, references like XXX.1 or XXX.2 and so on identify particular elements (such as particular vehicles or particular stations), wherein references without the dot-notation XXX stand for the elements in general.

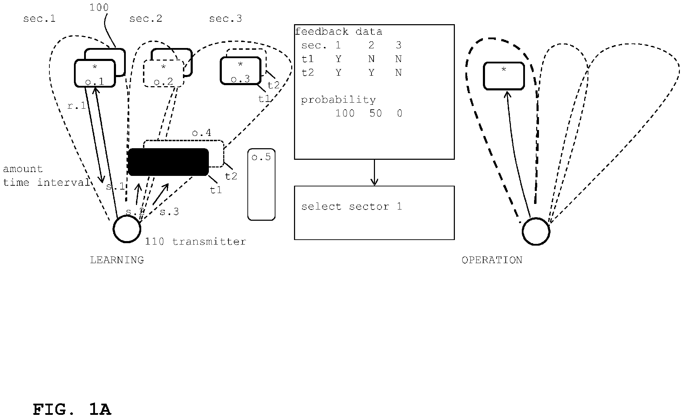

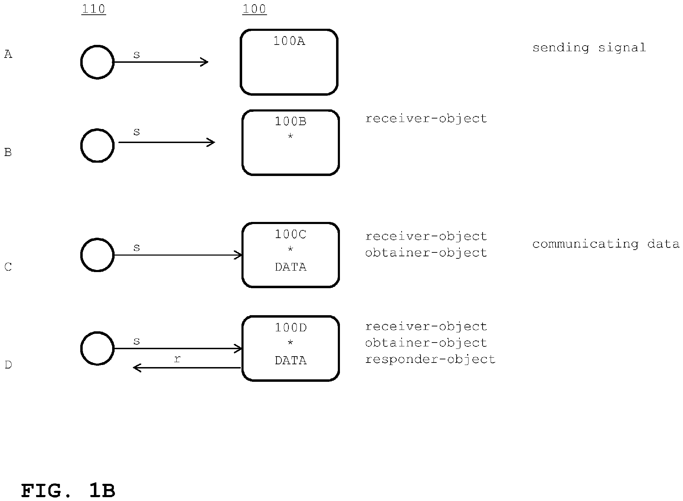

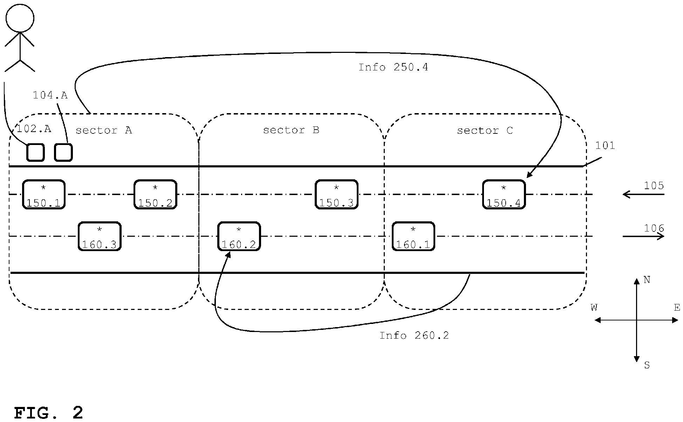

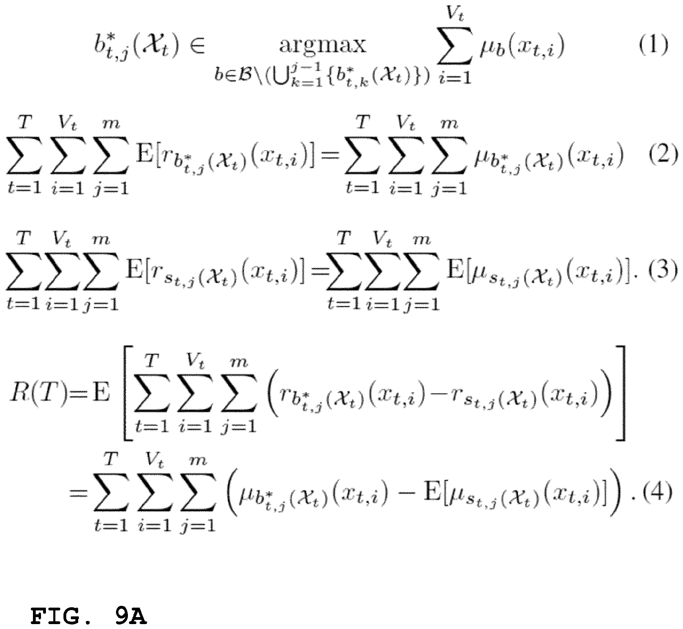

The description explains the approach with system, method and computer program in increasing granularity, by explaining objects (FIGS. 1A and 1B), by explaining scenarios in that some of the objects that are road vehicles (FIGS. 2-7), and by explaining a particular implementation (FIGS. 9A-10B).

The description differentiates the terms "information" and "data". Data refers to information that is communicated through computers, and/or through radio signals.

### General Overview

FIGS. 1A and 1B illustrate an overview to a computer-implemented method for controlling a radio transmitter 110 that communicates data to objects 100 ("object data"). Radio transmitter 110 transmits directed radio signals s.1, s.2, s.3 (collectively s) as beams into corresponding sectors sec.1, sec.2, sec.3, respectively. Directing the signals is frequently called beam forming. Data is encoded in most of that signals.

Communicating object data depends on a variety of factors, usually AND-related, among them:
- first, the availability of radio signals s at objects 100, and
- second, the ability of objects 100 to obtain data.

To explain the first aspect, the legend of FIG. 1B differentiates cases A, B from C, D. An arrow approximates a rectangle in A and B. This indicates that transmitter 110 sends a radio signal s into the direction of object 100, but that the radio signal s does not reach it. Cases C and D show arrows reaching the rectangle. This indicates that transmitter 110 sends the radio signal into the direction of a receiver-object 100 and that the receiver-object actually receives the radio signal. For simplicity of illustrations, theses radio signals are assumed to be within line-of-sight (LOS) from the transmitter.

To explain the second aspect, receiver-objects (cf. 100 B, 100 C, 100 D, o.1., o.2. o.3) are objects that are associated with receivers (The receiver is part of the object, or is attached to the object). A receiver * is an electronic circuit having at least two functions:
- tuning to a radio signal (signal s, from transmitter 110, if available) and
- decoding the radio signal to data.

Both functions in combination enable the receiver to obtain data (i.e. object data). A receiver-object that actually obtains object data is called obtainer-object (cf. 100 C, 100 D). While the object-receiver-association remains unchanged, receiver-objects are obtainer-objects only at time intervals (or time periods) when they obtain data. The process of sending signals in combination with decoding signals to data is also called "communicating data (to objects)".

The object data can be relevant for controlling activities of the objects. In other words, the data can be control data.

For simplicity of explanation, it is assumed that both receiver functions are not separated in their results. In other words, receivers tune to signals and decode them without exceptions. In practical implementations, some receivers tune to signals but fail to decode.

Objects not associated with receivers are non-receiver objects (cf. 100 A, o.4, o.5). They can't obtain data.

However, not every receiver-object is obtaining data (because there is no signal to tune into). In FIG. 1B, receiver-object 100 B could obtain data, but there is no signal available. There are goals, such as:
- primary, to communicate data to objects, and
- secondary, to maximize the amount (or quantity) of that data.

In environments with multiple receiver-objects, the primary goal is reached - in theory - if all receiver-objects are also obtainer-objects (at least during some of the time), the secondary goal is reached if all obtainer-objects maximize the amount of data that they obtain. The goals are understood as optimization goals, in view of resources (computers, energy etc.). In practical implementations, "all" can't be reached.

Since the secondary goal depends on the first goal, the overview of FIGS. 1A and 1B focuses on the primary goal, and the description gradually introduces the details for the secondary goal as well. Without departing from the scope, and without the need of further explanation herein, those of skill in the art can set other goals for optimization (e.g., to minimize the amount of electrical energy to communicate data, to continue communication while an object moves to the coverage area of a different transmitter etc.)

The objects within the sectors (or near the sectors) are collectively referred to as environment (or surroundings) of radio transmitter 110. But looking at this environment, there are further factors to considers:
- As it will be explained, radio transmitter 110 is physically located in areas with objects that move (at least most of the time) and with objects that do not move.
- The objects influence the capability of radio transmitter 110 to send radio signals to the receiving objects. The influence can be positive (i.e., supporting signal availability, cf. 100 C, 100 D) or negative (signal non-availability, cf. 100 A and 100 B).

In view of the goals (communicate data to the receiver-objects), a computer could identify the obtainer-objects (primary) and could calculate data amounts (secondary), if data regarding the environment is known.

Such data would comprise an identification of objects, a classification into receiver/non-receiver functions, movement data and so on. Such data is - however - not available to a computer.

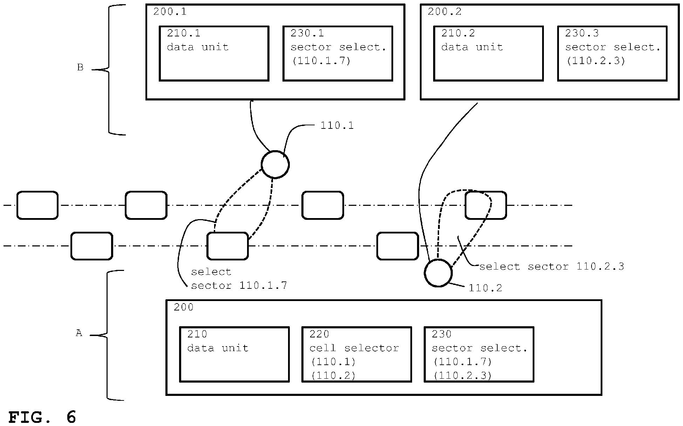

System, method and computer program take a different approach to reach the goal. A computer that is associated with transmitter 110 (not illustrated in FIGS. 1A and 1B, but in FIG. 6) controls transmitter 110 to interrogate the objects by communicating test signals (i.e., test data), receiving feedback (from the obtainer-objects), and by applying machine learning for selecting sectors to send signals.

In summary, transceiver 110 sends signals that are directed into corresponding sectors. In other words, transceiver 110 sends signals into its environment. Some signals do not reach any object (cf. 100 A, 100 B), some signals do reach receiver-objects that become obtainer-objects (cf. 100 C, 100 D). The signals can be considered to be test signals.

The obtainer-objects (cf. 100 D) return a feedback signal r to transmitter 110 (cf. r.1 in sec.1). These objects are responder-objects (or responding objects). Implementations for the feedback channel will be explained below. The computer uses the feedback signals to derive feedback data. For simplicity of explanation, it can be assumed that the feedback signals are not lost.

By evaluating the response data, the computer identifies the performance of the communication over the identified sectors (or beams) as numerical values (or as a combination of numerical values). Depending on the goal, the communication performance can be measured differently.
- Corresponding to the primary goal, the communication performance can be measured as a probability value for communicating data (i.e. sending signals, decoding signals to data). The computer can identify sectors (or beams) with threshold-exceeding probability values. Ranking probability values (among values for different beams) is possible.

Corresponding to the secondary goal, the communication performance can be measured as the amount of data. Further differentiation is possible, for example, by data amounts for particular conditions, such as data rate, transmission time etc. (e.g., relatively low rate over a relatively long time versus relatively high rate at a relatively short time or the like).

Looking at the granularity, the communication performance can be measured for each beam individually, but combinations, aggregations are possible (e.g., threshold in view of a probability for some beams; data amount for some beams in combination etc.).

To selects sectors for subsequently sending radio signals, the computer can apply machine learning.

Much simplified, interrogating objects to obtain feedback data (or response data) uses the feedback capacity (of the responder-objects) in a step called exploiting. Selecting sectors accordingly can be considered as exploring.

The activities: (i) interrogate receiver-objects by communicating data to the receiver-objects, (ii) receive response from receiver-objects (as feedback responses), (ii) identify a sector / beam for transmitting subsequent data can be performed for a single time period, in an exploration/exploitation time period.

The computer performs both activities substantially simultaneously in repetition (of the time periods), so that with every repetition, machine learning makes the adaptation to the environment more accurate.

The description now looks at FIG. 1A with more detail.

The adaptation to the environment uses machine-learning with a learning activity (illustrated on the left side) that uses feedback data. The radio signals s.1, s.2 and s.3 (that transceiver 110 sends) can be considered as test signals. In an operation activity (illustrated on the right side) that follows, radio transmitter 110 can send radio signals with data that is of relevance to objects in a particular sector that is selected (control signals for the objects).

The particular sector has a threshold-exceeding probability value that an object in the sector actually receives the signal. Learning and operation can be performed substantially simultaneously. Further explanations also provide details by that a computer at the transmitter investigates beams (and sectors), and uses some of the beams (and sectors) as the result. The test signals can comprise information that is relevant for the objects. This approach merges the activities to an ongoing adaptation activity.

In summary, radio transmitter 110 explores/exploits, learns from the environment and adapts to its environment.

Objects o.1, o.2 and o.3 can be located within sectors sec.1, sec.2, and sec.3, respectively, at various points in time:
- At t1, object o.1 is located in sec.1, and object o.3 is located in sec.3
- At t2, object o.1 is located in sec. 1, and object o.2 is located in sec.2

As used herein, o.1., o.2 and o.3 are considered as responsive objects with the following properties:
- The responsive objects are receiver-objects (that decode the radio signals).
- The responsive objects can return feedback (e.g., r.1) to transmitter 110, indicating that receipt and decoding was successful. In that case, the responsive objects actually become responder-objects. For simplicity of explanation it can be assumed that obtaining data triggers returning feedback in all cases.
   There are at least two options to implement the feedback paths:
   (i) The responsive objects can be associated with transmitters as well, and transmitter 110 is also a receiver. In other words, there would be a bi-directional channel with transceivers.
   (ii) The responsive objects can also return the feedback signals through other channels, even through a network operating in other frequency ranges.
- The responsive objects are physically located - at least temporarily - within a transmission range from transmitter 110. The range is also considered as coverage area.

The description uses the simplified assumption that all receiver-objects that receive data (according to the goals) are also responsive objects. However, if for some of the receiver-objects the feedback channel is not available, the impact on the learning would be negligible.

Objects with negative influence are counter-productive to the goals. Some of them are explained in the following:
Attenuation object o.4 can be located in the sectors as well, but o.4 has the property to attenuate the radio signal. As a consequence, the radio signal can't be decoded by objects that are beyond object o.4. At t1, object o.4 is located in sec.2 and sec.3. At t2 it is located elsewhere, but not within the sectors. As illustrated, object o.4 is located within LOS between transmitter 110 and objects o.2 and o.3. As illustrated, o.4 is a non-receiver object, but it is understood that receiver-objects can also attenuate signals. It is advantageous that the learning process uses the responses (feedback) so that differentiating attenuation objects is not required. Complexity can be reduced.

Interference object o.5 symbolizes that sending signals from transmitter 110 to objects o.1, o.2, and o.3 can be negatively influenced by objects that interfere with the radio signals. The person of skill in the art understands influences by terms such as multipath, scattering, shadowing, Doppler-spreads, and others. Examples for interference objects include walls, road surfaces, etc. Any positive influence is not discussed here. Again, the learning process does not have to identify if and why an object interferes, this reduces complexity (in the operation of the computer) as well.

As it will be explained, the exact location of the objects (responsive objects, attenuation and interference objects) does not have to be determined. The adaptation uses feedback signals that indicate receipt and that provide the data basis for the mentioned exploration (in learning).

The objects (responsive, attenuation, interference) can be moving objects that change the locations (e.g., from t1 to t2), o.3 at t1 can be physically the same thing as o.1 at t2. There is a consequence: data that is to be communicated to a particular object does not have to be communicated while an object is located in a sector that is potentially influenced by signal attenuation (or other effects that negatively influence the signals). The data can be communicated to the object when it is located in a different sector. In other words, vectors [ ] identify
- a sector,
- a time-slot, and
- (optionally) an object

For the vectors, sending signals (from the transmitter) can be related to a probability value. Simplified, the probability value is obtained during learning phase, and the probability value is used during the operation phase.

In the example, the vector [sec.1, t2] has a higher success probability than vector [sec.3, t1] for communicating data to the same physical object. The identification of such favorable vector is performed by machine learning.

More in detail, transmitter 110 sends s.1, s.2 and s.3 as test signals. As it will be explained below, there can be limitations to the number of simultaneously transmitted signals, but for simplicity, s.1, s.2 and s.3 are transmitted at the same time. Looking at feedback data, at t1, a response signal is only available from the object in sec.1 (that is from object o.1, YES=Y). At t2 (o.4 has moved out of sight), there are responses from o.1 (in sec.1, Y) and from o.2 (in sec.2, Y). (At t2, there is no object in sec.3 that could respond, NO=N). The resulting probability values are calculated (histogram) as 100% for sec.1, as 50% for sec.2 and as zero for sec.3. The response signals do not have to arrive during t1, t2 etc. it is sufficient to provide a logical link from test signals to response signals.

The example is much simplified. Practically, histograms and probabilities are obtained by much more test signals (during much more test cycles.)
In other words, the transmitter identifies - for substantially every sector - a probability value of data communication (send signals, decode them), and marks the sectors with threshold-exceeding probability values (e.g., 80%) as candidate sectors.

As it will be explained further, especially in combination with an implementation example, data regarding successful communication (YES) can be enhanced by data that indicate the actual amount of data that arrive at the objects (cf. primary goal, and secondary goal). In other words, transmitter 110 provides a communication channel with a data rate (amount of data per time) that is being learned. As the person of skill in the art understands, the data rate depends on the modulation scheme of the signal, on the coding scheme of the data, and on other aspects that can be chosen prior to deployment. However, the data rate also depends on many other factors, such as interferences with objects. Despite such circumstances, the transmitters adapt themselves to an optimum amount of data.

This adaptive approach (with learning and operation) can practically be performed at each base station (transmitters) of a network, with minimum interaction between the base-stations of the network. Therefore, the approach is scalable. Learning complexity - if any - is limited to independent transmitters.

### Selection of Beams/Sectors

Looking at the timing, transmitter 110 is active not only during t1 and t2, but during a sequence of time periods t1, t2, t3, t4 (measured in milliseconds or seconds) and so on, practically only limited by the life-time of transmitter 110. The selection of beams (or sectors) will be explained as a selection according to feedback data (and according to the communication performance). Selecting beams according to feedback data is also referred to as "exploiting". To avoid selections that are biased, selecting beams at random is also possible, and called "exploring". The sequence uses both exploiting and exploring, wherein the share of exploiting is higher (e.g. 80% of the periods exploit, 20% explore).

The random selection can be differentiated as a selection among the beams not selected during exploiting (e.g., beams 2 and 3), or a selection among all beams (e.g., 1, 2 or 3). This approach makes sure that no beam is being ignored. For example, object o.4 may disappear so that is some periods, beams 2 and 3 are suitable for communicating data.

The description explains further details by using a traffic scenario in that the responsive objects are vehicles that receive traffic data (FIGS. 2-7). The description will then explain an implementation of the machine learning with the so-called contextual multi-armed bandit problem and with a contextual online learning algorithm (FIGS. 9AB-10AB).

### Overview for Traffic Scenarios

FIG. 2 illustrates an overview to a traffic scenario with road vehicles 150 and 160 on road 101, in a view from above. Vehicles 150 and 160 can be cars, cargo truck, busses, bicycles, motorcycles and others. The description now investigates further circumstances for objects that are vehicles. Objects attributes can be taken over to have: receiver-vehicles, non-receiver vehicles (not further discussed, but potentially moving on the road as well), obtainer-vehicles, responder-vehicles, responsive vehicles etc., also attenuating vehicles (e.g., buses at bus stops), interference vehicles and so on. Object data is vehicle data (data that is communicated to the vehicles). The data to be communicated can be relevant for the operation of the car, in the illustration this is traffic data. Traffic data can control the operation of the vehicles, at least indirectly. Besides traffic data, the vehicle data can comprise data for entertainment systems of the vehicles, data that is used for communication devices that are operated by the passengers of the vehicles.

In a traditional setting, vehicles 150 and 160 are being driven by humans. However, in advanced settings to be expected for the future, some of the vehicles use computer-assisted driving (systems that help human drivers). Semi-autonomous and even autonomous driving (humans are no longer the drivers) can also be expected (at least for the cars).

For convenience of illustration, the figure illustrates a coordinate system with north N, south S, west W, east E directions. Vehicles 150 and 160 are moving in west-east direction, this is just an assumption convenient for illustration. Vehicles 150.1, 150.2, 150.3 and 150.4 are moving in first direction sense 105 (in the example, west-bound), and vehicles 160.1, 160.2 and 160.3 are moving in opposite, second direction sense 106 (in the example, east-bound).

The figure indicates tracks or trajectories of the vehicles by dot-dash lines. This is an approximation. Road 101 can be a two-lane-road (for direction senses 105 and 106) with the lanes corresponding to the trajectories. The figure corresponds to a road with continental right-side driving, but modifying the scenario for left-side driving (United Kingdom, Japan etc.) is possible. Road 101 can have four or more lanes with trajectories with two or more lane. It does not matter if a vehicle moves on a traffic lane or on a fast lane: the trajectory would be the same. Further, the road can be curved or can go uphill or downhill, but the illustration can explain the technology with a linear road more easily.

FIG. 2 (and most of the following figures as well) is considered a snap-shot, taken during time point t1. As time points have an assumed zero duration, the vehicles do not move during t1.

Just for convenience of illustration, the road is illustrated with segments A, B and C. The segments summarize the location of data sources on the road (at least partly) and/or outside the road. As used herein, data sources are the origin of information that can be relevant for the movement of the vehicles. By way of example, this is explained with item 102.A located at the edge of road 101 (in segment A).

Item 102.A could be a static object, in the sense that the information does not change over time (i.e., while a particular vehicle drives one the road). Examples are traffic signs, markings on the surface of the road. Item 102.A could be a dynamic object, in the sense that information relating to this object changes. Examples are person that might cross the road at any time, traffic lights or the like. Item 102.A can stand symbolize a natural phenomenon, such as for example rain or snow with the consequence the road surface becomes slippery. Such information - if sensed - would be valuable for controlling the vehicle.

At t1, vehicle 150.4 is located in segment C (east), but at time point t3 (not illustrated), vehicle 150.4 will be located in segment A (west). At t1, vehicle 160.1 is located in segment B, but will be located in segment C at a later point in time. The figure is not scaled to a particular speed (or different speeds per direction senses). The arrows 250.4 and 260.2 indicate that vehicles 150.4 and 160.2, respectively, require traffic data regarding that segment (or part) of the road they will be in the near future. Info 250.4 conveys the information regarding item 102.A. To stay with the example of the person, the person is moving or not, is an adult or a child etc. Traffic data that is collected through one or more sensors 104.A (that are located at or near the road, usually with location data) is called sensory data. Examples comprise high density (HD) maps, radar feeds etc. Those of skill in the art can collect traffic data from other sources, even collect data from vehicles.

In other words, there is a requirement for traffic data to be communicated, but the information flow direction is opposite to the movement direction (cf. info arrows 250.4, 260.2 and the sense arrows 105, 106). Such circumstances can add a timing constraint: Data regarding a particular segment must be communicated until the vehicle enters the segment.

Depending on the settings, the information/data granularity can be different.

In the above-mentioned traditional setting, information can be communicated by announcements in public radio ("traffic congestion between ..."), by transmitting appropriate data to navigation systems, etc. The resources for communicating the information is limited to a few seconds (of air time), or to a relatively small amount of data (measured in kilobytes). Also, the information is not directed to particular drivers and/or vehicles.

However, in the advanced settings, the situation changes dramatically. Traffic data to be communicated:
- requires data-rates measured in gigabits per second
- needs to be targeted to particular vehicles
- changes frequently (as the vehicles move from segment to segment)
- takes detail into account regarding other traffic participants (vehicles, person 102 etc.), regarding obstacles etc.

Traffic data is obtained by sensors, cameras etc. at the road (i.e., real-time data), by maps or plans (i.e., pre-defined data) or otherwise.

The description now introduces an approach in connection with FIGS. 2-7. Data is communicated by radio signals with millimeter-waves, ("mm waves" or "mmW") Such radio signals have frequencies between 30 GHz and 300 GHz. The International Telecommunication Union (ITU) uses the terms "Band 11" or "Extremely high frequency (EHF)".

However, there are further constraints to be considered. For the following figures, direction senses 105, 106 and vehicles 150, 160 remain the same. Road 101 and item 102.A are not illustrated, for simplicity.

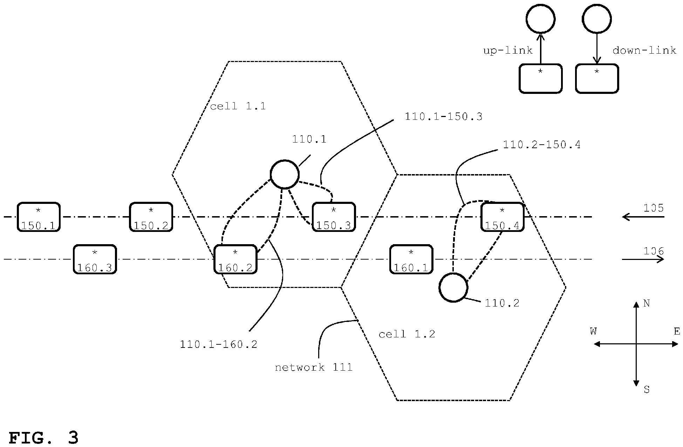

FIG. 3 illustrates the scenario with first radio network 111. Network 111 comprises:
- base station 110.1 in cell 1.1 and
- base station 110.2 in cell 1.2
- (base station 110.# in cell 1.# in general)

Usually, there is one base station (or central station) per cell, so that the indices # are the same. Network 111 is located along the movement trajectory of the vehicles (i.e., at least some cells are located along the road). Further adjacent cells (west of cell 1.1, east of cell 1.2) are not illustrated. The cells are illustrated by the usual notation of hexagons. Network 111 can be a cellular network that maintains a continuous communication with a mobile station. However, in the present case, it is only relevant that base stations 110.1 and 110.2 can communicate data while a vehicle is within the area (i.e. "hexagon") of one station.

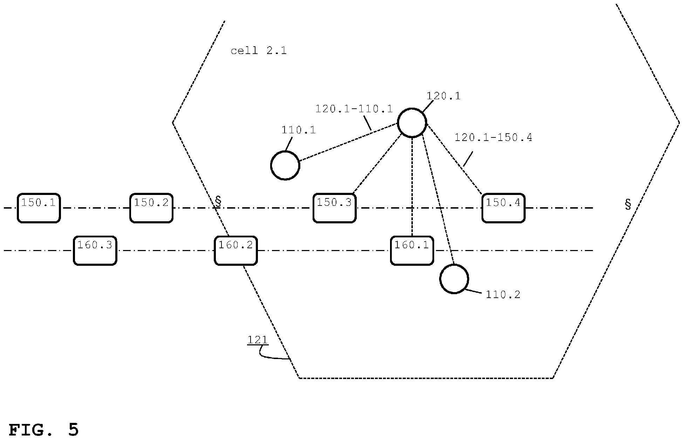

The base stations can communicate with each other, by known techniques (such as wide/local area networks, via further cellular networks cf. FIG. 5, or otherwise). Due to relatively small communication ranges, cells 1.2 and 1.2 can be called "microcells" (or even "picocells"). Base stations in the EHF-band are also called "mmBS".

Vehicles 150 and 160 comprise radio equipment (at least receivers) to receive signals from the base stations. In other words, the vehicles are receiver-vehicles (*). The vehicles are also responsive vehicles (cf. FIGS. 1A and 1B). In terms of network 111, the vehicles are referred to as "mobile stations". The base stations communicate traffic data to the vehicles. It is noted that first network 111 is not exclusively allocated to traffic data. First network 111 operates as a mm wave network.

An implementation can use radio signals in the 60 GHz frequency band (57 to 66 GHz), for that the standard IEEE 802.11ad-2012 defined details.

Optionally, the vehicles also comprise transmitters that can send signals to the base stations. Practically, receivers and transmitters are combined into so-called transceivers, both at the base-stations and at the vehicles.

By definition:
- a "down-link" stands for communication from the base stations to the mobile stations
- an "up-link" stands for communication from the mobile station to the base stations

The description concentrates on the down-link, but the constraints (and the approaches to address them) are applicable to the up-link likewise. It is noted that the up-link can be used for the feedback signals (cf. FIGS. 1A and 1B).

It is noted that objects that are not vehicles could also be equipped with transceivers (such as traffic signs, sensors, cameras etc.). Human users could carry mobile devices with transmitters. Such devices would be considered mobile stations as well.

As a (first) technical constraint, it is noted that the transmitters (in both the base station and the mobile stations) can't communicate data in both directions at the same point in time. Therefore, the communication is half-duplex. In other words, there is time-division access to the communication channel, with sending, receiving, sending etc. alternating. However, this constraint can be neglected. The majority of data is communicated through the down-link.

As a (second) technical constraint, it is noted that the communication range (the maximal distance between base and mobile station) is limited by factors such as
- transmission energy (i.e., field strength of transmitters),
- reception sensitivity (of the receivers),
- relative altitude between base station and mobile station,
- form of the antennas (both in base station and in mobile station)

This constraint has the additional aspects of attenuation objects, interference object and so on, as already explained above in connection with FIGS. 1A and 1B.

While the communication range can be indicated by a rated value of a radius around the base station, practical implementations have to take into account that the range can be shorter, or can be longer as the rated range. Typical rated values can be assumed to be between 100 m and 200 m (for transmit powers of 1 W).

In the example of FIG. 3, base-station 110.1 communicates with vehicle 160.2 and with vehicle 150.3, and base-station 110.2 communications with vehicle 150.4. The communication follows the notation "base-station - vehicle". Other station-vehicle pairs are out of range (at t1), but will be in range in future point of time.

Base-station 110.1 can communicate with vehicle 150.4 (when it reaches the cell), and base-station 110.2 can communicate with vehicles 160.2 and 160.3 (when they reach the cell). This does not means that they will actually communicate (receiver-vehicle not always obtainer-vehicle).

As a (third) technical constraint, it is noted that that communication between a base station and a mobile station is limited in time. Vehicles are moving. In the example, vehicles 150.3 and 160.2 are moving out of cell 1.1, and vehicles 150.4 and 160.1 are moving out of cell 1.2. The vehicles are expected to be within the range of a single base station for fractions of a second only. The duration of time during that a single base station (110.1 OR 110.2) can transmit data to vehicle 150/160 is called "contact time". The contact time can also depend on the form of beam (cf. FIG. 1A): a relatively broad beam can communicate data to a vehicle for more time than a relatively narrow beam. The discussion of this constraint is simplified, for example in the sense that transmission energy would be equal for broad and for narrow beams. The quality of the feedback data will intrinsically depend on this or other constraints, so that a technical assessment with much detail is not required.

Traffic data that is relevant for a particular vehicle and for a particular location must arrive in time, before the vehicle reaches the location. For example, traffic data 250.4 (cf. FIG. 1A) for vehicle 150.4 is communicated from base station 110.2. In an alternative, information 250.4 could be communicated from base station 110.1.

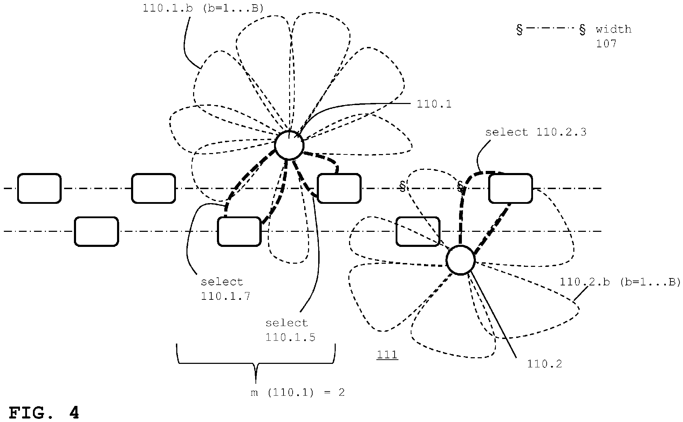

FIG. 4 illustrates the scenario with further detail for first radio network 111.

As a (fourth) technical constraint, it is noted that - at least - the base stations (of first network 111) can't communicate (with mobile stations) in all directions all of the time. Technically this is due to omnidirectional path loss (cf. Rangan et al.). To compensate this loss, the base stations communicate in so-called beams.

A beam is a directed radio signal that is transmitted into a particular space. In that particular space, the transmission energy is high enough for a receiver to tune into the signal and to decode its data (i.e., to obtain data, cf. FIGS. 1A and 1B). A coverage sector ("sector" in short) is that geographical area in that the receiver can receive the signal (and decode its data). Every beam has its corresponding sector. For simplicity, the sectors are illustrated by two-dimensions only, but sectors could also be differentiated by different altitudes.

The sectors are indicated by dashed lines. In the figure, the sectors of a base-station look like petals of a flower. The sectors can be different from each other Therefore, the "petals" are illustrated in variations. A sector width, or beam width 107 is illustrated by way of example for one the sectors between § and § along the trajectory. In this case, sector width 107 indicates the movement distances for vehicles through that sector. Overlap between sectors is possible, but not desired. (The implementation to be explained below gives guidance to deal with overlap.)

Technically, the beams are related to antenna arrangements. The antennas can be implemented as electrically steerable arrays, as mentioned by Rangan et al. A base-station can communicate through a maximal number of beams, at the same time. In other words, some beams are selected (or activated), some not. The notation follows "110.#.selected-beam". Person of skill in the art can provide circuitry that selects one (or more) beams for sending signals. The time required for selecting and de-selecting can be neglected. Due to the correspondence of beam and sector, the notation is applicable for the sectors as well. In other words, beam selections are also sector selections.

To illustrate the selection, the base-stations are illustrated with "bold" sectors and with "plain" sectors. Sector 110.1.5 in bold indicates that the antenna of base station 110.1 provides a radio signal with a beam that is directed into the sector. The same principle applies to sectors 110.1.7 and 110.2.3. The other sectors (110.1.b, 110.2.b, plain) are without beams. Again, the illustration investigates time point t1, the beam-to-sector assignment (by selecting, de-selecting beams) changes so that in one of the following time points, the selection can be completely different. In the above-introduced terms, only receiver-vehicles that are located within the "bold" sectors can become obtainer-vehicles.

As illustrated, the maximal number of beams or sectors of a base station is B. The figures illustrates B=10 for station 110.1, and B=7 for station 110.2, but these numbers are chosen for simplicity of illustration. (Further below in the implementation example, B will be equal for all stations).

The maximal number of beams to be selected at the same time is m (m < B). The number can vary from station to station. In the example, m is assumed to be m = 2. In the example, base-station 110.1 operates at its limit, and base-station 110.2 still has a beam available.

Selection requires information, such as the following:
- information regarding the presence (or absence) of vehicles, for particular points in time (e.g., the information that vehicle 150.4 is approaching cell 1.1, and when)
- information regarding the presence (or absence) of obstacles, or any situations that could prevent the propagation and the reception of signals (cf. FIGS. 1A and 1B, negative influence by attenuation objects etc.)

The description now explains a technical means - a second network - that can be used to obtain and communicate such information as auxiliary data (to the base stations 110.1 and 110.2 of the first network).

### Auxiliary Network

FIG. 5 illustrates second radio network 121 with base stations 120.1 in cell 2.1 (base station 120.# in cell 2.# in general)
Compared to first network 111 (FIG. 4), the areas of second network 121 are larger. As a consequence, vehicles remain in second network 121 for a longer time (compared to first network 111). This is indicated by § ... § along the trajectory. Second network 121 uses lower frequencies (with longer waves: centimeter, decimeter, meter waves), such as in ITU-bands 9 (ultra high frequency, UHF) and 10 (super high frequency SHF). An example for second network 121 is a network operating according to Long-Term Evolution (LTE) standards. Bases stations in LTE are also called "LTE eNB".

As in telecommunications, the letter "G" (generation) is frequently used, second network 121 would be a 3G-network or a 4G-network, and first network 111 would be a 5G-network.

Compared to first network 111, the constraints of second network 121 are different.
- Second network 121 has a lower data-rate (for communication from base to mobile stations). In scenarios as described, traffic data can't be communicated to the vehicles such that the data can control the operation of the vehicle. (This is due to the lower carrier frequencies, for example, using sub-6 GHz bands)
- Second network 121 is less obstacle-sensitive. This is considered as an advantage (e.g., for communicating some of the auxiliary data).
- The base-stations are not limited to particular beams (or directions). Beam selection is usually not used.
- Second network 121 has a lower deployment density (number of base stations per area) than first network 111.
- Signal transmission capacities in second network 121 are usually measured on-site (e.g., by so-called war-driving tests), but similar measurements are usually and practically not performed for first network 111 (due to relatively high efforts for the tests).

It is further assumed that - at least - the vehicles can be equipped with transmitters for second network 121 as well. In other words, the vehicles have a dual interface (i.e. a communication interface with receivers for networks 111 and 121).

Data communication is illustrated between base-station 120.1 and vehicles 150.3, 160.1 and 150.4, with the notation "base-station-vehicle". It is possible to consider the base-stations 110.1 and 110.2 of first network 111 as "mobile" stations of second network 121, as for data communication with base-station 110.1 and 110.2 (notation "base-station 120.# - base station 110.#). Practically all stations of second network 121 (i.e., base station 120.1 and the mobile stations) communicate bi-directionally (in down-link from the base stations, and in up-link to the base stations)

Using second network 121 in addition to first network 111 can mitigate some of the above-mentioned constraints.
- Vehicles can communicate trajectory information (to the base stations of the second network, and subsequently to the base stations of the first network). For example, vehicles 150.3, 150.4 and 160.1 are booked into cell 2.1 (base station 120.1). This provides information - at a rough granularity - regarding the location of the vehicles. The vehicles can actively communicate information via signals (at relatively low data-rate). Vehicles can register themselves at the base stations 110 that they are approaching. The person of skill in the art can provide calculations for the arrival time (and departure time) for particular vehicles at particular cells (first network). For example, vehicle 150.4 can communicate that is moves west-bound at a particular speed, this leading to the arrival time point for cells.
- Second network 121 can serve as a back-bone for communication between the base stations 110 of the network 111.

It is noted that base and mobile stations in network 121 are not limited by circumstances explained with FIGS. 1A and 1B, network 121 is limited by lower data rates. Using both first network 111 and second network 121 can be considered as a heterogeneous cellular system, in that disadvantages of one network are compensated by the other network (e.g., lower/higher rates, signal availability / restrictions), thus using synergy.

FIGS. 3-4 can be used to explain a fifth constraint. Base stations for second network 121 are usually installed at fixed locations, such on the roofs of buildings or at towers. The communication range is known in advance, and precise planning avoids skip zones.

Such planning is complicated (practically rather impossible) for the base stations of first network 111. Base stations 110 are deployed to space that is available but time and effort intensive planning is avoided. In other words, base stations 110 can simply be dropped where space is available. As a consequence, data to configure the base stations is potentially not available or not available to the extent that is conventionally used for base stations of the second network. The approach uses self-configuring, self-learning etc. as a counter-measure to this constraint, as explained. Planning the deployment of base stations 110 can therefore be simplified.

### Computer

FIG. 6 illustrates computer 200 that performs the computer-implemented method. Computer 200 comprises memory and processing unit. In view of the function, computer 200 comprises modules, such as:
- data unit 210 that collects data, such as responses from the responsive objects (e.g., the vehicles), data that indicate the arrival (or departure) of particular vehicles schedule for predetermined time points, data with external traffic data (from traffic information systems as life data, from schedules as static data, etc.).
- optionally, cell selector 220 that selects a cell within first network 111 (selects the transmitter)
- sector selector 230 that selects a particular sector for transmitting radio signals.

The units 210 and 230 (and optionally 220) thereby can perform the adaptation to the environment by machine learning according to the method, with learning and operation (cf. FIGS. 1A and 1B).

Computer 200 is illustrated in two embodiments A (with a single computer 200) and B (with computers 200.1 and 200.2). As in B, computers 200.1 and 200.2 can be implemented as being part of transmitter 110.1 and 110.2. In such cases, there would be first computer 200.1 in transmitter 110.1 and second computer 200.2 in transmitter 110.2.

Computer 200 (or 200.1 /200.2) does not have to be part of the transmitter. It can be located elsewhere, but communicatively coupled to the transmitter, provided that an communication delay does not slow down the execution of the method.

### Scenario with attenuating object

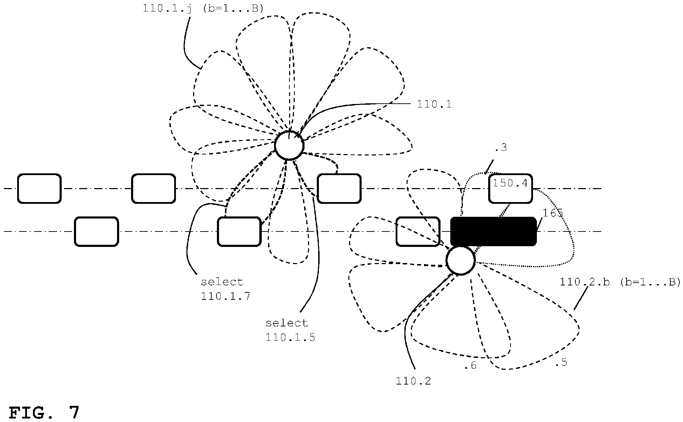

FIG. 7 illustrates the scenario of FIG. 4 again, but with an attenuating object 165.

In the example, object 165 can be vehicle that stops on the road. There might be a bus stop so that the bus (even if being a vehicle with receivers) acts as attenuator or the like. In the example, object 165 blocks the radio waves into sectors 110.2.3 and .4 so that vehicle 150.4 can no longer be reached. In implementations, the period character of such blockages can be considered (by machine learning via missing response signals, and - optionally - by data from external data sources).

Also, FIG. 7 illustrates that some sectors can overlap. Taking the sectors of base station 110.2 by clock-wise indices, sectors 110.2.5 and sectors 110.2.6 overlap. As a consequence, simultaneously selecting beams 5 and 6 (for transmitting radio signals at the same time) would prevent the receptions of the signals at receivers (such as vehicles located in an N-S-directed road, not illustrated). In embodiments, the simultaneous selection is avoided (e.g., by settings in computer 200).

Further, there is an assumption of no interference between beams. However, in practical situations there might be reflections from surrounding objects (walls, buildings in the environment, cf. object o.5 in FIG. 1A) that may cause interference. Since interferences will disturb the communication of radio signals, the response signals (cf. FIG. 1A) would indicate communication failure. Computer 200 takes such communication failures into account (during learning) so that interferences are considered.

As mentioned above, the description now continues by investigating the adaptation by machine-learning with the contextual multi-armed bandit problem and with a contextual online learning algorithm.

### Method and Computer Program

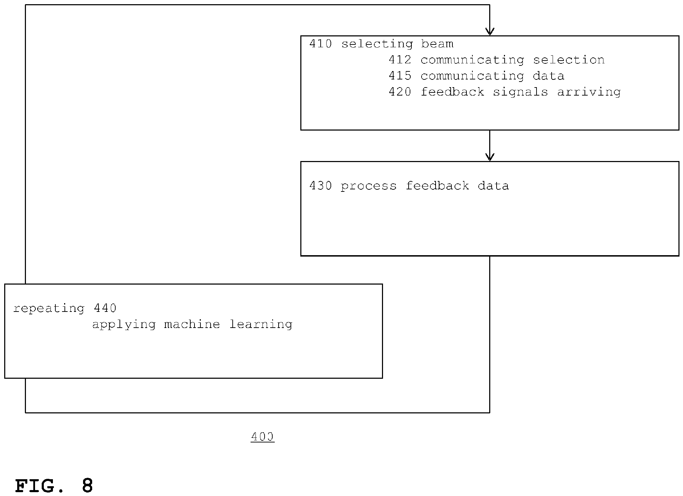

FIG. 8 illustrates a flow-chart diagram of computer-implemented method 400 for controlling radio transmitter 110 that communicates data to objects being associated with receivers. As explained, the radio transmitter transmits directed radio signals as beams into a plurality of sectors. The method is implemented by a computer, for example by computer 200 (cf. FIG. 7).

In selecting 410, the computer selects a sub-plurality of beams and causes 415 the radio transmitter to communicate data to the objects. The radio transmitter sends directed radio signals via the selected beams.

In processing 430, the computer processes feedback data from feedback signals that arrive 420 (earlier) from objects that have obtained data from the radio transmitter. The computer converts feedback data to values that indicate the communication performance (to communicate data to the objects).

In repeating 440, the computer repeats selecting 410 and processing 430 (the transmitter repeats its activities as well). The computer selects sub-pluralities of beams, according to the values that indicate communication performance (i.e. one sub-plurality per time period). This performance is related to the above-mentioned goals. Communication performance can indicate probability values for communicating data in combination with thresholds (cf. the primary goal) and/or the amount of data that was communicated from the radio transmitter to the objects (cf. the secondary goal).

Optionally, computer controls a radio transmitter that acts as a base station in a first network, operating in the EHF spectrum. Optionally, the computer processes feedback data from feedback signals arriving from the objects through a second network, operating in the SHF or in the UHF spectrum.

Optionally, after selecting 410 the sub-plurality of beams but prior to causing 415 the radio transmitter to communicate data to the objects, the computer communicates 412 the selection to the objects.

As explained, the objects can be vehicles, located in at least some of the sectors. For such cases, the computer processes location data from the vehicles, optionally by receiving a registration from the vehicles. Registration can be through a network (e.g., LTE) different from the first network. Processing location data can comprise to process speed data of the vehicle(s).

For vehicle objects, causing the radio transmitter to communicate 415 data to the objects is performed for traffic data. Processing 430 feedback data can be combined with further data from external data sources, wherein the further data is indicative of objects that influence the data communication (e.g., data regarding a bus stopping at stations).

In repeating, the computer can use machine learning with a multi-armed bandit problem. The multi-armed bandit problem can be a multi-armed bandit problem in the contextual category with the context being movement of the objects (i.e. vehicles).

FIG. 8 also illustrates a computer program or a computer program product. The computer program product - when loaded into a memory of a computer and being executed by at least one processor of the computer - performs the steps of the computer-implemented method. In other words, the blocks in FIG. 8 illustrate that the method can be implemented by a computer (such as computer 200) under the control of the program. The same principle applies to the actions that are explained but not further illustrated in FIG. 8.

### Example Implementation

The description now refers to the previously explained figures and continues by explaining an implementation example. The description focuses on the down-link (from base stations 110 to mobile stations, i.e. to the vehicles), so that the interfaces at the vehicles comprises at least the receivers. The results of beam-selection are applicable to the up-link direction as well, so that the person of skill in the art can apply the teachings accordingly, without the need of further explanation herein.

There is an assumption that initially (shortly after deployment) base stations 110 do not have data regarding their surroundings or environment. In terms of the objects explained above, computer 200 (in base station 110) has no data regarding attenuating and interfering objects (cf. FIG. 1A). If a road is linear (as in FIG. 2) or shows a curve, if there are blockages etc. such data is not available when base stations 110 have been deployed. This assumption reduces the complexity because a configuration according to the surrounding is not required (cf. the difference to base stations of the second network).

However, computer 200 (cf. FIG. 6) holds data that indicates the direction and direction sense of vehicle movement (cf. 105 and 106 in FIG. 2, cf. the N-S-W-E-coordinates), also referred to as vehicle context.

Vehicles 150 and 160 - in the following only "vehicle(s)" are equipped with
- an LTE interface to maintain a connection to base stations 120, and
- an mmWave interface communication of data (i.e., traffic data) from base station 110.

For simplicity of explanation, it is assumed that the interfaces of the vehicles can be directed to receive radio signals from base stations 110 via selected beams. In other words, a vehicle having received an identification of selected beams (the "selection") can tune its receiver antennas accordingly.

Beam selection can be defined by computer rules (or models) that computer 200 obtains by machine learning. This approach allows base stations 110 to select the beams while accounting for dynamic traffic and environment changes. Over time, the computer rules are becoming more and more accurate. Machine learning uses the above-mentioned so-called multi-armed bandit problem. Various topics in wireless communications have been treated using multi-armed bandits, as explained by S. Maghsudi and E. Hossain, "Multi-armed bandits with application to 5G small cells," IEEE Wireless Communications, vol. 23, no. 3, pp. 64-73, Jun 2016.

In multi-armed bandit problems, a decision maker has to select a subset of actions of unknown rewards with the goal to maximize the reward over time, as explained by P. Auer, N. Cesa-Bianchi, and P. Fischer, "Finite-time Analysis of the Multiarmed Bandit Problem," Journal of Machine Learning, vol. 47, no. 2-3, pp. 235-256, May 2002.

For a traffic scenario as described above, such a multi-armed bandit approach is relevant since base stations 110 may only use a limited set of beams simultaneously (cf. number m). There is an optimization goal to select beams (i.e., a subset of the B beams) such that the amount (or quantity) of data that the vehicles successfully obtain is maximized. In other words, the implementation example focuses on the above-mentioned secondary goal.

In this implementation example, computers 200 do not simply learn which beams communicate maximal quantities of data on average (cf. FIG. 1A), but in addition exploit additional information about approaching vehicles (cf. the directions).

The multi-armed bandit problem has categories, and the implementation example considers the multi-armed bandit problem in the contextual category. The contexts relate to side information that affects the rewards. By way of example, the following reference gives more background: T. Lu, D. Pal, and M. Pal, "Contextual Multi-Armed Bandits," in AISTATS, May 2010.

The implementation example uses a heterogeneous cellular system with base stations 110 (e.g., mmBS) within the coverage area of base stations 120 (e.g., LTE eNB). Such networks are expected for forthcoming 5G systems. In the example, base station 110 is communicatively connected to base stations 120 (in a so-called backhaul link arrangement).

In the following, the description continues to describe the implementation example with the following modalities.
- The description refers to a single base station 110, wherein the person of skill in the art can apply the teaching to the other base stations 110 (in network 111) as well.

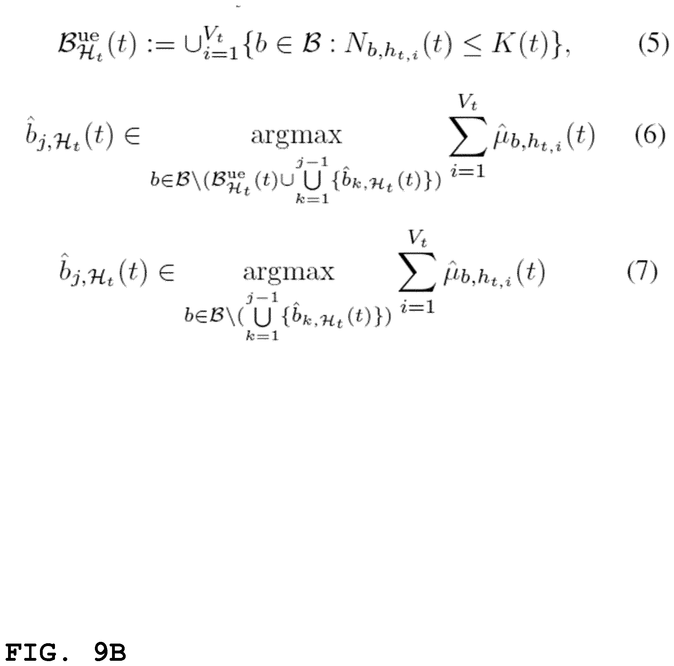

- FIGS. 9A and 9B illustrate formulas identified from (1) to (8). The formulas are considered part of the description.

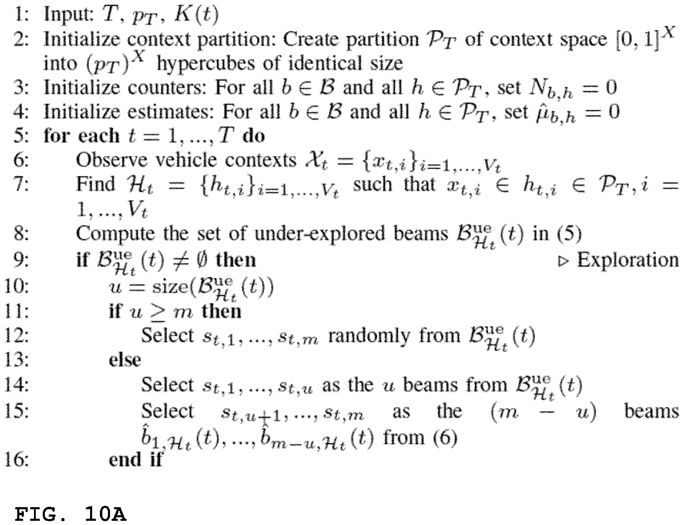

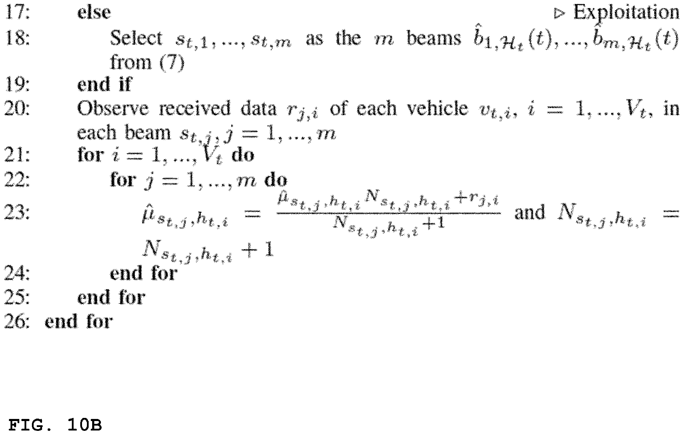

- FIGS. 10A and 10B illustrate pseudocode for an algorithm.
- Formulas and pseudocode occasionally use Greek Capital letters, the description transcribes them as Beta, Chi, etc.
- In the implementation example, base station 110 is a mm base station and is referred to as "mmBS".

The description is simplified by occasionally not differentiating between computer and transmitter. For example, "mmBS selects a subset of beams" is short for a computer selecting (the beams) and causing the transceiver to send signals.

The mmBS uses a finite set Beta of distinct, orthogonal beams. The number of such beams is given as B = |Beta|. The mmBS can only select a subset of beams simultaneously, as explained in connection with FIG. 4) . The symbol m indicates the number of such selected beams, where m is a positive integer, with m < B.

The mmBS updates the beam selection in regular time periods t. The periods are counted from t = 1 to t = T, T being integer.

During a period t, the mmBS performs activities (i), (ii), (iiia) and the vehicle performs activity (iiib).

During activity (i), a plurality of Vₜ vehicles registers with base station 110. The plurality can be given as a vector {nyₜᵢ} _{i = 1, ..., nyi}. In the example, the vehicles register to the mmBS via base station 120, and via the mentioned backhaul link (i.e. a network different from the first network). The number of vehicles Vₜ is smaller or equal to Vₘₐₓ, being a maximal number that can register (at the mmBS). As a result of the registration, the mmBS has information about the context x_{t, i}. The context is applicable for the particular vehicle with index i. Different vehicles have different context. As explained, the context can comprise the movement direction etc. (cf. 105, 106 in FIG. 2). Formally, in this example, the context is a data-structure for a vector in the dimension X, taken from a bounded context space, Chi = [0,1]^{X}. In other words, the mmBS has data that identify the particular vehicles that are moving into the communication range (i.e. plurality of sectors) of the mmBS.

During activity (ii), the mmBS now selects a subset of m beams. Sₜ stands for a plurality of selected beams, with m the number of selected beams, wherein the selected beams are a subset of the beams (number B), Sₜ = {sₜⱼ} _{j=1,...,m}, with Sₜ being a subset of Beta. As explained above, FIG. 4 illustrates the subsets of selected beams by bold lines. The Sₜ notation is equivalent.

As part of (ii), the mmBS communicates the selection to the vehicles (that have registered). In the example, the communication uses base station 120 of the second network (e.g., the LTE). This example is consistent with the downlink focus. Also, using the second network has the advantage that the selection can be communicated while the vehicle is not yet within the communication range of the mmBS.

During activity (iiia), the mmBS transmits data to the vehicle v_{t, i} as a radio signal (cf. FIG. 1A). The mmBS transmits data to the vehicle when it reaches the coverage area, the point in time is known from the context (arrival time, explained above).

During activity (iiib), the vehicle observes (or measures) the amount (or quantity) of data that it receives: rₛₜⱼ (xₜᵢₜ). This corresponds to the response (of FIG. 1A, YES) but with additional information, such as amount and context. The amount is calculated with respect to the end of the period t.

In general, the amount of data r_{b}(x) a vehicle with context x element Chi can successfully receive from the mmBS using beam b element B during one period is a random variable that depends on the environment of the mmBS (e.g., road conditions, blockages, etc. as explained above.). The random variable r_{b}(x) is called beam performance (i.e., the aggregate received data by vehicle) via beam b under context x. The random variable is bounded in [0, Rₘₐₓ], where Rₘₐₓ is the maximum amount of data that can be received by a vehicle. Rₘₐₓ depends on the maximum achievable rate of the communication channel (explanation with FIGS. 1A and 1B).

The description now takes a short excurse to theory. The above-mentioned contact time, depending on the sector/beam width (107 in FIG. 4) and on the speed of the vehicle, and other considerations could be used to estimate an expected beam performance [µ_{b}(x) of beam b under context x (µ_{b}(x) would stand for r_{b}(x)).

The mmBS aims at selecting a subset of beams which maximizes the expected received data at the vehicles, i.e., maximizes the sum of the expected beam performances. The optimal subset in period t can be denoted by Beta* (Chi t) as the set {b*ₜⱼ (Chiₜ}_{j = 1, ...,m}, subset of Beta. The subset Beta* depends on Chi t and for j=1 to m, the formula (1) is formally satisfied. Hence, the expected beam performance could be calculated for each context and for each beam a priori, the mmBS could select the optimal subset of beams for approaching vehicles according to formula (1).

Over a time frame with T consecutive periods t = 1 to t =T , the amount of data (received in total) would be expected to be according to formula (2).

To return from the excurse: the mmBS can't apply the theory because if does not know the environment. To solve this, the mmBS learns the expected beam performances µ_{b}(x) over time (cf. the repetitions 440). In order to learn these quantity values, the mmBS has to try out different beams for different vehicle contexts over time (cf. FIG. 1A for a very simplified introduction of the interrogation). Those beams that are proven to be "good" (i.e., communicating data in sufficient quantities, that is threshold exceeding quantities) are to be selected more frequently (than others).

Hence, the mmBS finds a trade-off between exploring beams (i.e., identifying by learning, of which it has little knowledge, cf. the random selection) and exploiting beams having relatively high average beam performance (performance known from feedback data).

The description now investigates the mentioned learning algorithm. For substantially each period with approaching vehicles of contexts Chiₜ, the mmBS selects a subset Sₜ of m beams. The selection of the learning algorithm depends on the history of selected beams in previous periods and the corresponding observed beam performances. Given the selections St (for t = 1 to T) of the learning algorithm, the expected amount of data received by the vehicles is given by formula (3).

The expected difference in the amounts of received data (from the above calculation in the excurse and the learning algorithm) is called "regret of learning", as in formula (4).

As mentioned, there is a contextual multi-armed bandit problem in combination with a learning algorithm. The mmBS learns the expected beam performances under different contexts online over time. There is an assumption that the vehicle contexts are similar. The performance of a particular beam will on average be similar.

The computer (of the base station) first uniformly partitions the context space into small sets of similar contexts and learns about the performance (i.e. data rate) of different beams independently in each of these small sets.

Then, in either of its discrete periods, the computer either enters an exploration phase or an exploitation phase. The phase it enters is decided based on the contexts of approaching vehicles and based on a control function. While in the exploration phases, the computer selects a random subset of beams (cf. step 410 if performed initially), in the exploitation phases (cf. the repetitions), the computer selects beams that showed the highest performance when selected in previous periods.

By observing the amount of data received by vehicles in the system, the computer acquires performance estimates of beams. Thereby, it learns the performance of the different beams under different vehicle contexts over time.

Referring to the pseudocode for an algorithm, FIGS. 9A and 9B, it is also called "Fast Machine Learning" or "FML" in short:
As in lines 2-4, FML uniformly partitions the context space Chi = [0; 1]^{X} into (p_{T})^{X} X-dimensional hypercubes. The hypercubes have the size (1 / p_{Y})^{X}. p_{T} is an input. The resulting partition is called Rho_{T}.

FML initializes first counters N_{bh} (t) and second counter µ_{b} h(t) for each beam b (element of Beta) and for each hypercube h (elements of Rho_{T}). The first counter represents the total number of vehicles with the context in hypercube h that approached the mmBS whenever beam b was selected in any of the periods t. The second counter represents the estimated beam performance of beam b for vehicles with the context in hypercube h.

In period t, FML observes the contexts Chiₜ of the Vₜ approaching vehicles and for each context.

As in lines 6-7, FML then determines for which hypercube this context belongs to. In other words, it finds hₜᵢ (element Rho_{T}) with xₜᵢ element of hₜᵢ. As in line 8, based on the collection Etaₜ of hypercubes, the computer calculates a set Beta (t) as in formula (5).

In that formula, K: {1, ..., T} (real numbers) is a deterministic, monotonically increasing control function, that the computer gets as input.

There are two branches under the conditions of beam exploration.

For under-explored beams, the computer goes to an exploration phase (lines 9-16). In case that the number u(t) (amount of Beta (t)) if under-explored beams is at least m, the computer selects m beams at random. In case that the number u(t) of under-explored beams is smaller than m, the computer selects all u(t) beams. In addition, the computer selects m - u(t) beams that satisfy (6), for j = 1, ..., m-u(t).

If there are no under-explored beams, the computer enters an exploitation phase (lines 17-19). The computer selects the m beams from Beta that satisfy (7) for j = 1, ..., m. After the beam selection, the computer observes the beam performance of each selected beam for each vehicle within this period (line 20). Using these observations, the computer updates the internal counters.

### Further Considerations

The person of skill in the art can enhance learning (with the explore and the exploit aspect) by using training data, as external reference.

### Generic Computer

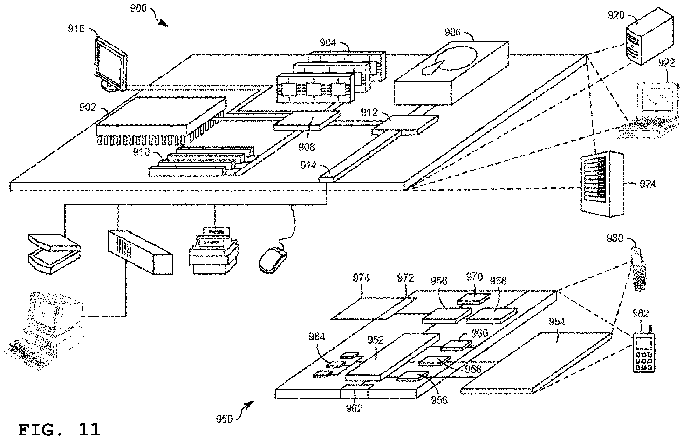

FIG. 11 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer system 200. Computing device 950 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), FPGAs, computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

## Claims

1. Computer-implemented method (400) for controlling a radio transmitter (110, 110.1, 110.2) that communicates data to objects (100, o.1., o.2., o.3), the objects being associated with receivers, wherein the radio transmitter is enabled to send directed radio signals (s, s.1, s.2., s.3) as beams into a plurality of sectors (sec.1, sec.2, sec.3, 110.1.b, 110.2.b), the method (400) performed by a computer (200) that controls the radio transmitter (110), the method (400) comprising the following steps:
selecting (410) a sub-plurality of beams and causing (415) the radio transmitter to communicate data to the objects, wherein the radio transmitter sends directed radio signals via the selected beams;
processing (430) feedback data from feedback signals that arrive (420) from objects that have obtained data from the radio transmitter, wherein the feedback data is being converted to values that indicate communication performance to communicate data to the objects;
**characterized in that** the method further comprises:
repeating (440) the selecting (410) and processing (430) step, to select sub-pluralities of beams, according to the values that indicate communication performance, wherein repeating (440) selecting (410) and processing (430) comprises to apply machine learning with a multi-armed bandit problem in the contextual category with the context being movement of the objects.

2. The method (400) according to claim 1, wherein the computer (200) controls a radio transmitter (110) that acts as a base station in a first network (111), operating in the EHF spectrum, and wherein the computer (200) processes feedback data from feedback signals arriving from the objects through a second network, operating in the SHF or in the UHF spectrum.

3. The method (400) according to claim 2, wherein the computer (200), after selecting (410) the sub-pluralities of beams and prior to causing (415) the radio transmitter to communicate data to the objects, performs the following: communicating (412) the selection to the objects.

4. The method (400) according to any of claims 2-3, wherein the objects (100) are vehicles (150/160) located in at least some of the sectors, with a further step of processing location data from the vehicles.

5. The method (400) according to claim 4, wherein the step of processing location data from the vehicles is performed by receiving a registration from the vehicles.

6. The method (400) according to claim 5, wherein the step of processing location data from the vehicles is performed by receiving a registration from the vehicles through a network different from the first network.

7. The method (400) according to claim 6, wherein the step of processing location data comprises to process speed data of the vehicles.

8. The method (400) according to any of claims 3-7, wherein causing (415) the radio transmitter to communicate data to the objects is performed for traffic data.

9. The method (400) according to any of claims 3-8, wherein processing (430) feedback data is combined with further data from external data sources, wherein the further data is indicative of objects that influence the data communication.

10. The method (400) according to any of claims 1-9, wherein the communication performance indicates probability values for communicating data in combination with thresholds.

11. The method (400) according to any of claims 1-10, wherein the communication performance indicates the amount of data that was communicated from the radio transmitter to the objects.

12. A computer program product - when loaded into a memory of a computer and being executed by at least one processor of the computer - causes the computer to perform the steps of the computer-implemented method according to any of claims 1-11.

13. A computer (200) that controls a radio transmitter (110) and that is adapted to perform the computer-implemented method according to any of claims 1-11.

14. A radio transmitter (110) that comprises a computer (200) adapted to control the radio transmitter and to perform the computer-implemented method according to any of claims 1-11.

## Patentansprüche

1. Computerimplementiertes Verfahren (400) zum Steuern eines Funksenders (110, 110.1, 110.2), der Daten an Objekte (100, O.1., O.2., O.3) überträgt, wobei die Objekte Empfängern zugehörig sind, wobei der Funksender aktiviert ist, um gerichtete Funksignale (S, S.1, S.2., S.3) als Strahlen in mehrere Sektoren (Sek.1, Sek.2, Sek.3, 110.1.b, 110.2.b) zu senden, wobei das Verfahren (400) durch einen Computer (200), der den Funksender (110) steuert, durchgeführt wird, wobei das Verfahren (400) die folgenden Schritte umfasst:
Auswählen (410) einer Untermehrheit von Strahlen und Veranlassen (415) des Funksenders, Daten an die Objekte zu übertragen, wobei der Funksender gerichtete Funksignale über die ausgewählten Strahlen sendet;
Verarbeiten (430) von Rückkopplungsdaten von Rückkopplungssignalen, die von Objekten, die Daten von dem Funksender erhalten haben, ankommen (420), wobei die Rückkopplungsdaten in Werte umgewandelt werden, die die Übertragungsleistung angeben, um Daten an die Objekte zu übertragen;
**dadurch gekennzeichnet, dass** das Verfahren ferner Folgendes umfasst:
Wiederholen (440) des Auswahl- (410) und Verarbeitungsschritts (430), um Untermehrheiten von Strahlen, gemäß den Werten, die die Übertragungsleistung angeben, auszuwählen, wobei das Wiederholen (440) Auswählen (410) und Verarbeiten (430) umfasst, um ein maschinelles Lernen mit einem mehrarmigen Banditenproblem in der Kontextkategorie anzuwenden, wobei der Kontext eine Bewegung der Objekte ist.

2. Verfahren (400) nach Anspruch 1, wobei der Computer (200) einen Funksender (110) steuert, der als eine Basisstation in einem ersten Netzwerk (111), das in dem EHF-Spektrum in Betrieb ist, fungiert, und wobei der Computer (200) Rückkopplungsdaten von Rückkopplungssignalen verarbeitet, die von den Objekten über ein zweites Netzwerk, das in dem SHF- oder in dem UHF-Spektrum in Betrieb ist, ankommen.

3. Verfahren (400) nach Anspruch 2, wobei der Computer (200), nach dem Auswählen (410) der Untermehrheiten von Strahlen und vor dem Veranlassen (415) des Funksenders, Daten an die Objekte überträgt, das Folgendes durchführt: Übertragen (412) der Auswahl an die Objekte.

4. Verfahren (400) nach einem der Ansprüche 2-3, wobei die Objekte (100) Fahrzeuge (150/160) sind, die sich in wenigstens einigen der Sektoren befinden, mit einem weiteren Schritt des Verarbeitens von Standortdaten von den Fahrzeugen.

5. Verfahren (400) nach Anspruch 4, wobei der Schritt des Verarbeitens von Standortdaten von den Fahrzeugen durch Empfangen einer Registrierung von den Fahrzeugen durchgeführt wird.

6. Verfahren (400) nach Anspruch 5, wobei der Schritt des Verarbeitens von Standortdaten von den Fahrzeugen durch Empfangen einer Registrierung von den Fahrzeugen über ein Netzwerk, das sich von dem ersten Netzwerk unterscheidet, durchgeführt wird.

7. Verfahren (400) nach Anspruch 6, wobei der Schritt des Verarbeitens von Standortdaten umfasst, um die Geschwindigkeitsdaten der Fahrzeuge zu verarbeiten.

8. Verfahren (400) nach einem der Ansprüche 3-7, wobei das Veranlassen (415) des Funksenders, um Daten an die Objekte zu übertragen, für Verkehrsdaten durchgeführt wird.

9. Verfahren (400) nach einem der Ansprüche 3-8, wobei das Verarbeiten (430) von Rückkopplungsdaten mit weiteren Daten von externen Datenquellen kombiniert wird, wobei die weiteren Daten Objekte angeben, die die Datenübertragung beeinflussen.

10. Verfahren (400) nach einem der Ansprüche 1-9, wobei die Übertragungsleistung Wahrscheinlichkeitswerte für das Übertragen von Daten in Kombination mit Schwellenwerten angibt.

11. Verfahren (400) nach einem der Ansprüche 1-10, wobei die Übertragungsleistung die Datenmenge, die von dem Funksender an die Objekte übertragen wurde, angibt.

12. Computerprogrammprodukt, das, wenn es in einen Speicher eines Computers geladen ist und durch wenigstens einen Prozessor des Computers ausgeführt wird, den Computer veranlasst,
die Schritte des computerimplementierten Verfahrens nach einem der Ansprüche 1-11 durchzuführen.

13. Computer (200), der einen Funksender (110) steuert und der dafür geeignet ist, das computerimplementierte Verfahren nach einem der Ansprüche 1-11 durchzuführen.

14. Funksender (110), der einen Computer (200) umfasst, der dafür geeignet ist, um den Funksender zu steuern und das computerimplementierte Verfahren nach einem der Ansprüche 1-11 durchzuführen.

## Revendications

1. Procédé mis en œuvre par ordinateur (400) destiné à commander un émetteur radio (110, 110.1, 110.2) qui communique des données à des objets (100, o.1., o.2., o.3), les objets étant associés à des récepteurs, dans lequel l'émetteur radio est activé pour envoyer des signaux radio dirigés (s, s.1, s.2., s.3) sous forme de faisceaux dans une pluralité de secteurs (sec.1, sec.2, sec.3, 110.1.b, 110.2.b), le procédé (400) effectué par un ordinateur (200) qui commande l'émetteur radio (110), le procédé (400) comprenant les étapes suivantes :
la sélection (410) d'une sous-pluralité de faisceaux et amener (415) l'émetteur radio à communiquer des données aux objets, dans lequel l'émetteur radio envoie des signaux radio dirigés par l'intermédiaire des faisceaux sélectionnés ;
le traitement (430) des données de rétroaction à partir de signaux de rétroaction qui arrivent (420) depuis des objets qui ont obtenu des données provenant de l'émetteur radio, les données de rétroaction étant converties en valeurs qui indiquent une efficacité de communication pour communiquer des données aux objets ;
**caractérisé en ce que** le procédé comprend en outre :
la répétition (440) de l'étape de sélection (410) et de traitement (430), pour sélectionner des sous-pluralités de faisceaux, selon les valeurs qui indiquent l'efficacité de communication, dans lequel la répétition (440) de la sélection (410) et du traitement (430) comprend l'application de l'apprentissage machine avec un problème de bandit manchot dans la catégorie contextuelle avec le contexte étant le déplacement des objets.

2. Procédé (400) selon la revendication 1, dans lequel l'ordinateur (200) commande un émetteur radio (110) qui agit comme une station de base dans un premier réseau (111), fonctionnant dans le spectre EHF et dans lequel l'ordinateur (200) traite les données de rétroaction provenant des signaux de rétroaction arrivant depuis les objets par l'intermédiaire d'un second réseau, fonctionnant dans le SHF ou dans le spectre UHF.

3. Procédé (400) selon la revendication 2, dans lequel l'ordinateur (200), après la sélection (410) des sous-pluralités de faisceaux et avant d'amener (415) l'émetteur radio à communiquer des données aux objets, effectue ce qui suit : la communication (412) de la sélection des objets.

4. Procédé (400) selon l'une quelconque des revendications 2 à 3, dans lequel les objets (100) sont des véhicules (150/160) situés dans au moins certains des secteurs, comportant une étape supplémentaire de traitement des données de localisation provenant des véhicules.

5. Procédé (400) selon la revendication 4, dans lequel l'étape de traitement des données de localisation provenant des véhicules est effectuée en recevant un enregistrement provenant des véhicules.

6. Procédé (400) selon la revendication 5, dans lequel l'étape de traitement des données de localisation provenant des véhicules est effectuée en recevant un enregistrement provenant des véhicules par l'intermédiaire d'un réseau différent du premier réseau.

7. Procédé (400) selon la revendication 6, dans lequel l'étape de traitement des données de localisation comprend le traitement des données de vitesse des véhicules.

8. Procédé (400) selon l'une quelconque des revendications 3 à 7, dans lequel le fait d'amener (415) l'émetteur radio à communiquer des données aux objets est effectué pour les données de trafic.

9. Procédé (400) selon l'une quelconque des revendications 3 à 8, dans lequel le traitement (430) des données de rétroaction est combiné avec des données supplémentaires provenant de sources de données externes, dans lequel les données supplémentaires sont révélatrices des objets qui influencent la communication de données.

10. Procédé (400) selon l'une quelconque des revendications 1 à 9, dans lequel l'efficacité de communication indique des valeurs de probabilité destinées à communiquer des données en combinaison avec des seuils.

11. Procédé (400) selon l'une quelconque des revendications 1 à 10, dans lequel l'efficacité de communication indique la quantité de données qui ont été communiquées de l'émetteur radio aux objets.

12. Produit-programme d'ordinateur, lorsqu'il est chargé dans la mémoire d'un ordinateur et exécuté par au moins un processeur de l'ordinateur, amène l'ordinateur à effectuer les étapes du procédé mis en œuvre par ordinateur selon l'une quelconque des revendications 1 à 11.

13. Ordinateur (200) qui commande un émetteur radio (110) et qui est adapté à effectuer le procédé mis en œuvre par ordinateur selon l'une quelconque des revendications 1 à 11.

14. Émetteur radio (110) qui comprend un ordinateur (200) adapté à commander l'émetteur radio et à effectuer le procédé mis en œuvre par ordinateur selon l'une quelconque des revendications 1 à 11.
